# EUROPEAN PATENT APPLICATION

(11) **EP 4 801 174 A1**
(43) Date of publication of application: **02.09.2026**
(21) Application number: 24882204.1
(22) Date of filing: 10.10.2024
(51) Int. Cl.: H04W 72/54, H04W 72/0457, H04W 74/04, H04W 84/12

(54) **COMMUNICATION DEVICE, COMMUNICATION DEVICE CONTROL METHOD, AND PROGRAM**

(30) Priority: 23.10.2023 JP 2023182153
(71) Applicant: Canon Kabushiki Kaisha, Tokyo 146-8501 (JP)
(72) Inventor: OTANI, Tomoya, Tokyo 146-8501 (JP)
(74) Representative: Canon Europe Limited
(86) International application number: PCT/JP2024/036235
(87) International publication number: WO 2025/089088

(57) **Abstract**

A communication device sets a NAV through a primary channel in the case where another communication device acquires a transmission opportunity through the primary channel. The communication device determines a backoff parameter of a secondary channel, at least based on a backoff counter that is a waiting time for the primary channel and tries to acquire the transmission opportunity through the secondary channel by using the backoff parameter that is determined and to transmit data. The communication device determines the backoff parameter of the secondary channel, also based on a waiting time corresponding to an AIFS period in the case where the backoff parameter of the primary channel includes the waiting time corresponding to the AIFS period.

## Description

### Technical Field

The present invention relates to a communication device that performs wireless communication, a method of controlling a communication device, and a program.

### Background Art

The IEEE (Institute of Electrical and Electronics Engineers) 802.11 standards are known as communication standards regarding a wireless LAN (Wireless Local Area Network). As for the IEEE 802.11be standard and the IEEE 802.11bn standard that is a subsequent standard thereof, it is considered that communication latency is reduced and channel utilization efficiency is increased.

A candidate technique that is considered is to improve the channel utilization efficiency in the case of communication by using a communication link that includes multiple channels. For example, PTL 1 discloses a technique for communicating by using another channel in the case where a primary channel cannot be used to acquire a transmission right.

### Citation List

### Patent Literature

PTL 1: U.S. Patent No. 11696353

### Summary of Invention

### Technical Problem

It is an object of the present invention to provide a technique for improving the channel utilization efficiency of a communication system that uses a communication link that includes multiple channels.

### Solution to Problem

To achieve the object described above, a communication device according to an aspect of the present invention includes transmission control means for setting a NAV (Network Allocation Vector) corresponding to a transmission opportunity through a primary channel, for determining a backoff parameter of a secondary channel, at least based on a backoff counter that is a waiting time for the primary channel, and for trying to acquire the transmission opportunity through the secondary channel by using the backoff parameter that is determined and to transmit data in a case where another communication device acquires the transmission opportunity through the primary channel through which the data is to be transmitted in a state in which a backoff parameter of the primary channel that is a waiting time until start of transmitting the data through the primary channel and that includes at least the backoff counter is not zero, and the transmission control means determines the backoff parameter of the secondary channel, also based on a waiting time corresponding to an AIFS (Arbitration Inter Frame Space) period in a case where the backoff parameter of the primary channel includes the waiting time corresponding to the AIFS period. Advantageous Effects of Invention

According to an aspect of the present invention, the channel utilization efficiency of a communication system that uses a communication link that includes multiple channels can be improved.

### Brief Description of Drawings

[Fig. 1] Fig. 1 illustrates the structure of a network system.
[Fig. 2] Fig. 2 illustrates the hardware configuration of a communication device.
[Fig. 3] Fig. 3 schematically illustrates an example of a procedure for channel access.
[Fig. 4] Fig. 4 schematically illustrates an example of a functional module for the channel access.
[Fig. 5] Fig. 5 illustrates a flowchart of an example of channel access control in STAs.
[Fig. 6] Fig. 6 illustrates a flowchart of an example of the channel access control in the STAs.
[Fig. 7A] Fig. 7A illustrates an example of parameter update control at the time of re-transition to a primary channel.
[Fig. 7B] Fig. 7B illustrates an example of the parameter update control at the time of the re-transition to the primary channel.
[Fig. 8A] Fig. 8A illustrates a flowchart of an example of secondary-channel-related parameter share control according to a second embodiment.
[Fig. 8B] Fig. 8B illustrates a flowchart of an example of the secondary-channel-related parameter share control according to the second embodiment.
[Fig. 9A] Fig. 9A illustrates a flowchart of an example of the secondary-channel-related parameter share control according to a third embodiment.
[Fig. 9B] Fig. 9B illustrates a flowchart of an example of the secondary-channel-related parameter share control according to the third embodiment.
[Fig. 10] Fig. 10 schematically illustrates an example of a procedure for channel access in consideration of a legacy STA.
[Fig. 11] Fig. 11 schematically illustrates a modification to the functional module.

### Description of Embodiments

Embodiments will hereinafter be described in detail with reference to the attached drawings. The embodiments described below do not limit the invention recited in claims. According to the embodiments, multiple features will be described. However, all of the multiple features are not necessarily essential, and the multiple features may be freely combined. In the attached drawings, like or similar components are designated by using like reference signs, and a duplicated description is omitted.

### <First Embodiment>

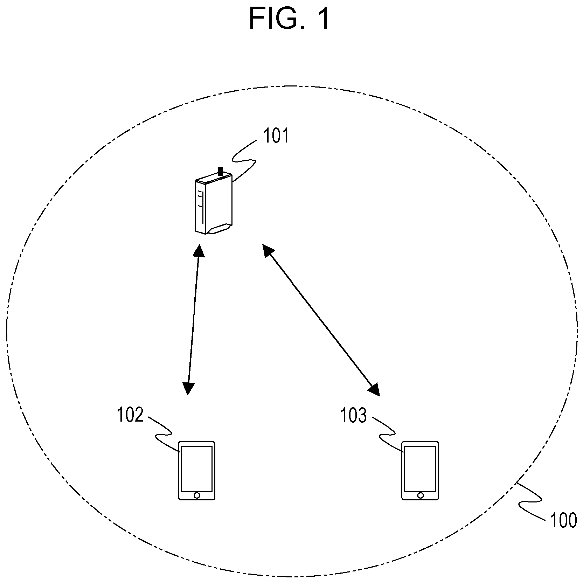

Fig. 1 illustrates an example of the structure of a network system according to the present embodiment. The network system according to the present embodiment includes an access point device (simply referred to below as an AP, an AP STA, or an access point) and two station devices (simply referred to below as STAs, Non-AP STAs, or stations).

An AP 101 and STAs 102 and 103 are configured so as to enable wireless frame communication conforming to the IEEE 802.11bn standard that is a subsequent standard of the IEEE 802.11be standard in which the target of the maximum transmission rate is 46.08 Gbps.

IEEE is an abbreviation for Institute of Electrical and Electronics Engineers. The features of the IEEE 802.11bn that is a subsequent standard of the IEEE 802.11be include high-reliability communication, low-latency communication, and throughput improvement during congestion. A wireless frame that is exchanged in accordance with the subsequent standard is also referred to as a UHR (Ultra High Reliability) PPDU. PPDU is an abbreviation for Physical Layer Protocol Data Unit.

The name of the UHR is given for convenience in consideration of a target to be achieved by the subsequent standard and a key feature of the standard, but another name may be given after the end of standard development. Similarly, the name of the IEEE 802.11bn may be changed to another name after the end of standard development. It is to be noted that the present specification and the attached claims can be essentially used for all subsequent standards of the 802.11be standard.

Returning to the description of Fig. 1, the AP 101 is an access point that supports a multi-band function that provides a network by using different frequency channels. In an example described according to the present embodiment, the AP 101 is a dual-band access point that provides a 2.4 GHz band network and a 5 GHz band network.

The AP 101 and the STA 102 according to the present embodiment establish multiple inter-device communication links and enable multi-link communication. The communication links are simply referred to below as the links. The AP 101 that performs the multi-link communication is also referred to as the AP MLD (AP Multi-Link Device) 101, and the STA 102 that performs the multi-link communication is also referred to as the non-AP MLD 102.

For example, the AP 101 establishes a link with the STA 102 through the 2.4 GHz band network and enables communication. The AP 101 and the STA 102 establish a link in, for example, a 5 GHz band in parallel with this. In this case, the STA 102 performs the multi-link communication via the multiple links.

Fig. 1 illustrates the network system that includes the AP 101, the STA 102, and the STA 103 by way of example, but the number of the STAs that are included in the network system may be larger than that in the figure. The AP 101 and the STAs 102 to 103 support communication (transmission and reception) of the UHR PPDU. In addition to this, however, communication of the PPDU conforming to a legacy standard that is a previous standard of the UHR standard can be supported. Specifically, the AP 101 and the STA 102 can be configured so as to support the transmission and reception of the PPDU conforming to, for example, the IEEE 802.11a/b/g/n/ac/ax/be standards.

Frequency bands that are used by the AP 101 and the STAs 102 to 103 are not limited to the 2.4 GHz band and the 5 GHz band described above. For example, different frequency bands such as a 6 GHz band, a Sub-1 GHz band, and a millimeter wave band may be used. The AP 101 and the STA 102 enable communication by using a bandwidth such as 20 MHz, 40 MHz, 80 MHz, 160 MHz, 320 MHz, 540 MHz, or 640 MHz. The bandwidth that is used by communication devices is not limited thereto.

In the IEEE 802.11 series standards, a frequency channel that uses a bandwidth of 20 MHz is defined as a minimum channel in a frequency band such as a 2.4 GHz, 5 GHz, or 6 GHz band. In the standards, multiple channels that can be used in the frequency bands of the 2.4 GHz, 5 GHz, and 6 GHz bands are defined. In the standards, a channel can be used in combination with another channel adjacent thereto.

According to the present embodiment, the use of a combination of a channel and another channel adjacent thereto is referred to as channel bonding in some cases. In some cases, a channel or a channel bundle of two or more channels adjacent to each other is referred to as a link. That is, a link formed by two channels with a 20 MHz bandwidth uses a bandwidth of 40 MHz.

The AP 101 establishes one or more inter-device links for data communication with the STAs 102 and 103. For example, the STA 102 performs a connection procedure together with the AP 101 in order to establish the links with the AP 101. When the connection procedure between the STA 102 and the AP 101 ends, the inter-device links are established. The establishment of the links enables the communication devices such as the AP and the STAs to access a wireless medium and enables communication with another communication device such as data communication. For example, in the case where an inter-device link that uses a bandwidth of 160 MHz is established, the AP 101 and the STA 102 communicate by using all or some of channels that are included in the link. The link that uses a bandwidth of 160 MHz may include a bundle of eight 20-MHz bandwidth channels.

The AP 101 and the STAs such as the STAs 102 to 103 determine whether transmission is possible by performing carrier sensing before data is transmitted. For example, each communication device measures the strength (reception signal strength) of a signal that is received on a channel to be used by the device itself for communication and determines that a signal is present on the channel in the case where the reception signal strength exceeds a predetermined threshold. Each communication device determines a transmission period during which a signal is transmitted, based on information such as a Duration field that is included in the signal that is received on the channel. For example, each communication device stores, as a NAV (Network Allocation Vector), a period that is represented by the Duration field that is included in the received signal in the device itself. Each communication device may use the stored NAV as a period during which the device itself does not communicate. The operation of each communication device to set the period during which the device itself does not communicate, based on information such as the Duration field in the received signal is also referred to as setting the NAV. In the case where it is determined by the carrier sensing that a signal is present on the channel, or in the case where the period of the set NAV does not end, each communication device may determine that transmission is not possible. In this case, the state of the channel may be referred to as a busy state. A state in which no signal is detected on the channel by the carrier sensing, and the NAV is not set may be referred to as an idle state. In the case where the channel is in the idle state, each communication device may determine that transmission is possible. For example, each communication device may determine whether transmission is possible by using only a primary channel (PCH) when communicating by using the 160-MHz bandwidth link. The PCH is one of the eight 20-MHz bandwidth channels that are included in the 160-MHz bandwidth link and may be reported to the STA 102 by using, for example, a Beacon frame that is periodically broadcasted by the AP 101. For example, in the case where the carrier sensing is performed through the PCH during a predetermined period, and consequently, it is determined that transmission is possible, the AP 101 and the STA 102 to the STA 103 may use another channel that is included in the same link for transmission by using the channel bonding. For example, a 160-MHz bandwidth PPDU may be transmitted. In the case where the carrier sensing is performed through the PCH, and consequently, it is determined that transmission is not possible, each communication device may postpone transmission even when another channel that is included in the same link is in the idle state. Each channel that is included in the link other than the PCH may be referred to as a secondary channel (SCH). The secondary channel may be referred to as a non-primary channel (NPCH).

In some cases where each communication device such as the AP 101 and the STAs 102 and 103 thus receives a signal through a channel, a signal is transmitted through another channel (for example, an adjacent channel) that has a frequency close to that of the channel. In some of these cases, the signal to be received is not appropriately received. For example, each communication device is capable of performing a transmission process and a reception process simultaneously by using different channels. In the case of reception by each communication device that uses a channel, transmission through an adjacent channel causes the power of a transmission signal to leak to the channel for a reception signal, and consequently, the interference with the reception signal occurs. In general, power due to a leakage of a transmission signal is much greater than the reception power of a reception signal, and accordingly, the reception signal is not appropriately received. In order to avoid such a circumstance, according to the IEEE 802.11 series standards, the PCH is provided as a channel that is commonly used for determination of whether transmission is possible between the communication devices. That is, during transmission by a communication device that uses the PCH, another communication device prevents transmission even when another channel is in the idle state. This enables a problem about interference due to a power leakage that occurs between the channels described above to be solved. However, when another channel (SCH) in the idle state is not used with the PCH being in the busy state, spectral efficiency decreases. For example, in a case considered herein, another communication device (for example, a STA or an AP that belongs to a different wireless network) transmits a frame by using a 20-MHz bandwidth channel corresponding to the PCH regarding the AP 101 and the STAs 102 and 103. In this case, the AP 101 and the STAs 102 to 103 determine that the channel is busy even when other seven SCHs are in the idle state, and accordingly, transmission through the SCHs is not possible. In some cases in this circumstance, the AP 101 may appropriately receive a signal that is transmitted by the STA 102 if the STA 102 transmits the signal to the AP 101 through a specific SCH in the idle state. Frequency resources are not efficiently used, for example, in the case where the SCHs in the idle state for remaining 140 MHz are not used because the PCH for 20-MHz is used by another network. A function that is provided according to the present embodiment is communication between the communication devices by using a SCH (or a NPCH) that is included in the same link as the PCH without using the PCH in the case where the PCH is used by another communication device. For example, in the case where it is determined that the PCH is in the busy state, the AP 101 and the STAs 102 and 103 begin transition to a secondary primary channel (SPCH) for determining whether transmission through a SCH (or a NPCH) is possible.

In the case where it is determined that the PCH is being used by another communication device, the AP 101 and the STAs 102 and 103 subsequently determine whether transmission through the SPCH is possible and uses one or more SCHs including the SPCH for the transmission in the case where transmission is possible. Channel access for transmission by using one or more channels including the SPCH without using the PCH may be referred to as NPCH access (Non-Primary Channel Access). As for the NPCH access, a communication device for transmission tries the channel access through the SPCH and transmits a signal to a counterpart communication device by using one or more SCHs including the SPCH. The communication device for reception waits the signal that is transmitted from the counterpart communication device by using one or more SCHs including the SPCH and performs a reception process as needed. For the NPCH access, the AP 101 and the STAs 102 to 103 share information (such as information for identifying the SPCH) about the NPCH access with a counterpart communication device in advance. For example, the information for identifying the SPCH can be included in Secondary Primary Channel Announcement Element in the Beacon frame. The Element may include information that represents Channel and information that represents Operating Class of the SPCH. The Operating Class is an identification that enables a frequency band that is defined by a country or an area in which the AP 101 is used to be uniquely identified. The Channel is an identification that enables a channel that is included in the frequency band that is identified by the Operating Class to be uniquely identified. The AP 101 may specify the position of the SPCH by storing a relative position on the frequency axis of the SPCH based on the PCH in the Element. For example, it is assumed that a communication device 100 uses a 160-MHz bandwidth link in a 6 GHz band and sets, as the PCH (a bandwidth of 20 MHz), 1 ch in the band. It is also assumed that the SCHs (a bandwidth of 20 MHz) are 5 ch, 9 ch, 13 ch, 17 ch, 21 ch, 25 ch, and 29 ch. In the case where the communication device 100 sets, as the SPCH, the 21 ch, 20 is set as the information for identifying the SPCH. That is, 20 that is a relative distance from the 1 ch that is the PCH to the 21 ch that is the SPCH on the frequency axis may be set as the information for identifying the SPCH.

A specific example of the operation of the channel access according to the present embodiment will now be described.

The AP 101 and the STAs 102 and 103 can be configured so as to support wireless communication based on another communication standard such as Bluetooth (registered trademark), NFC, or Bluetooth (registered trademark) LE (Low Energy). NFC is an abbreviation for Near Field Communication. The AP 101 and the STAs 102 and 103 can be configured so as to support wired communication with an Ethernet cable or wired communication with optical fibers. Specific examples of the AP 101 include a wireless LAN router and a personal computer (PC), but this is not a limitation. The AP 101 and the STAs 102 and 103 may be information processing devices such as wireless chips that support UHR PPDU transmission and reception. In this case, hardware circuits in the wireless chips can execute various kinds of control. Processors such as ASIPs, memories, and the hardware circuits in the wireless chips can perform various processes in cooperation with each other. ASIP is an abbreviation for Application-specific instruction set processor.

Specific examples of the STA 102 include a camera, a tablet, a smartphone, a PC, a mobile phone, a video camera, and a wearable device such as a smart glass, but this is not a limitation.

### <Hardware Configuration of Communication Device>

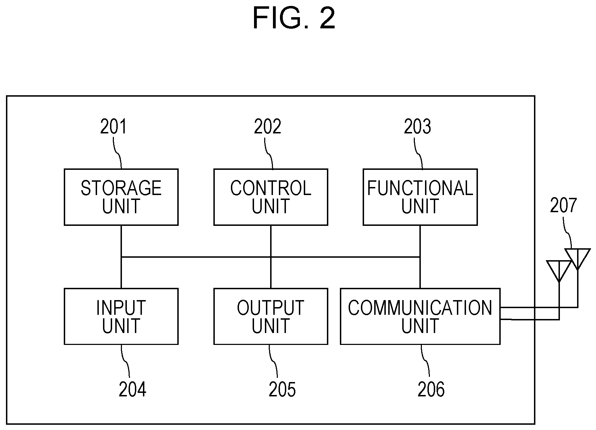

Fig. 2 illustrates an example of the hardware configuration of each communication device (the AP 101 and the STAs 102 to 103). In the example of the hardware configuration, each communication device includes a storage unit 201, a control unit 202, a functional unit 203, an input unit 204, an output unit 205, a communication unit 206, and antennas 207 to 208.

The storage unit 201 includes both of a ROM and a RAM or either of these and stores a program for performing various operations described later and various kinds of information such as communication parameters for wireless communication. RAM is an abbreviation for Random Access Memory, and ROM is an abbreviation for Read Only Memory. In addition to memories such as a ROM and a RAM, storage media, for example, nonvolatile storage devices such as a hard disk and a SSD (Solid State Drive) may be used as the storage unit 201.

For example, the control unit 202 includes a processor such as a CPU or a MPU, an ASIC (application-specific integrated circuit), a DSP (a digital signal processor), or a FPGA (a field-programmable gate array). CPU is an abbreviation for Central Processing Unit, and MPU is an abbreviation for Micro Processing Unit. The control unit 202 runs a program that is stored in the storage unit 201 and controls the entire device by operating a hardware circuit such as an ASIC. The control unit 202 may control the entire device by the program that is stored in the storage unit 201 and an OS (Operating System) in cooperation with each other.

The control unit 202 controls the functional unit 203 and performs a predetermined process such as imaging, printing, or projecting. The functional unit 203 is hardware for performing the predetermined process by the device. For example, in the case where a communication device is a camera such as a digital still camera or a smartphone that includes a camera, the functional unit 203 is an imaging unit, and a process of imaging a surrounding image is performed by using a camera unit that is included in the communication device and that is not illustrated. For example, in the case where a communication device is a printer, the functional unit 203 is a print unit, and a print process is performed on a sheet such as paper, based on print data that is acquired by wireless communication from the outside. For example, in the case where a communication device is a projector or a smart glass, the functional unit 203 is a projection unit, and a process of projecting image data or video data that is acquired by wireless communication from the outside is performed. In the case of a smart glass, for example, a projection surface is the retina of an end user. Data that is processed by the functional unit 203 may be data that is stored in the storage unit 201 or data that is used for communication with another AP or STA via the communication unit 206 described later. A communication device such as the AP 101 can provide a network storage function such as NAS (Network Attached Storage). The function is provided to another communication device as a web service such as a network storage service. For example, communication devices such as the STAs are connected to the network storage service that is provided by, for example, the AP 101 by using a protocol such as SMB, FTP, or WebDAV. Communication devices such as the STAs upload a file to the storage service and download a file in the storage. The inter-device communication of the UHR PPDU enables data communication such as uploading and downloading.

The input unit 204 receives various operations from a user. The output unit 205 outputs various outputs to the user. Examples of the outputs of the output unit 205 include at least one of screen display, voice output from a speaker, and a vibration output. The input unit 204 and the output unit 205 may be included in a single module as in a touch screen. The output unit 205 functions as a display means that provides information to the user. The input unit functions as a reception means that receives a user operation.

The communication unit 206 controls the wireless communication conforming to the IEEE 802.11 series standards and controls IP communication. According to the present embodiment, the communication unit 206 is capable of controlling communication for transmitting and receiving the UHR PPDU that is a wireless frame conforming to the 802.11bn standard and the PPDU conforming to a previous standard in cooperation with the antennas 207 to 208. For example, the antennas 207 to 208 are capable of transmitting and receiving a signal at least in the frequency band of a sub-GHz band, the 2.4 GHz band, the 5 GHz band, the 6 GHz band, or the millimeter wave band. In an example described according to the present embodiment, each communication device includes the two antennas but is not limited thereto. The number of the antennas may be 3 or more.

In the case where each communication device conforms to the NFC standard, the Bluetooth (registered trademark) standard, or the wired communication standard described above, the communication unit 206 may control the wireless communication and the wired communication conforming to these communication standards.

### <Channel Access>

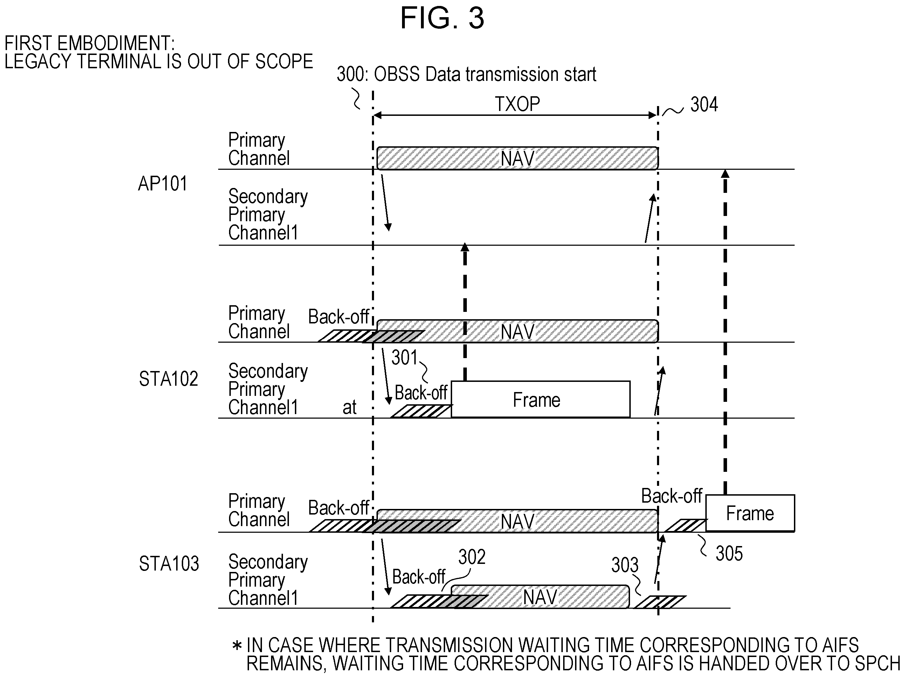

An example of a procedure for channel access according to the present embodiment will now be described with reference to Fig. 3. Fig. 3 schematically illustrates the example of the procedure for channel access according to the present embodiment.

At a timing before a reference sign 300, the STA 102 and the STA 103 try channel access through the PCH for data transmission. At this time, the STA 102 and the STA 103 decrease a transmission waiting time including a backoff counter and AIFS determined based on a backoff algorithm while the PCH is in the idle state. When the transmission waiting time with the PCH being in the idle state becomes zero, the STA 102 or the STA 103 can start the data transmission. However, if an OBSS communication device acquires the channel access of the PCH in the idle state earlier, the PCH becomes busy. This situation means that another communication device acquires a transmission opportunity through the PCH through which the STA 102 and the STA 103 are to transmit data. In the case illustrated in Fig. 3 by way of example, the OBSS communication device starts data transmission through the PCH earlier. More specifically, a one-dot chain line illustrated by using the reference sign 300 represents a timing at which the OBSS communication device starts the data transmission through the PCH earlier. OBSS is an abbreviation for Overlapping Basic Service Sets.

At a timing represented by using the reference sign 300, the AP 101 and the STA 102 to the STA 103 change a channel that is a target for channel access monitoring to the SPCH described above and try to acquire the transmission opportunity through the secondary channel. At this time, the AP 101 according to the present embodiment and terminals in BSS provided by the AP 101 such as the STA 102 to the STA 103 try the channel access through the SPCH also by using, for the SPCH, a backoff parameter that is used for the PCH. As for restrictions according to the present embodiment in order to simplify implementation for data communication through the SPCH, the data communication through the SPCH is permitted only while the PCH is busy. BSS is an abbreviation for Basic Service Sets.

In a situation represented by using a reference sign 301 and a reference sign 302, the backoff parameter is used also for the channel access through the SPCH, and in the case illustrated by way of example, the transmission waiting time of the STA 102 is shorter than the transmission waiting time of the STA 103. Fig. 3 illustrates the case where the STA 102 that has a short transmission waiting time acquires the transmission opportunity through the SPCH for the data transmission.

The STA 102 that acquires the transmission opportunity transmits a frame to the AP 101 through one or more SCHs including the SPCH. The STA 103 decreases the transmission waiting time while the SPCH is in the idle state.

A one-dot chain line illustrated by using a reference sign 304 represents a timing at which the transmission opportunity of the PCH acquired by the OBSS communication device expires. At this timing, the AP 101 and the STA 102 to the STA 103 change the channel that is the target for channel access monitoring to the PCH. That is, the AP 101 and the STA 102 to the STA 103 re-transit to a normal state in which the channel access through the PCH is performed. At this time, a communication device that is waiting for transmission through the SPCH tries the channel access through the PCH by using, for the PCH, the backoff counter that is used for the SPCH. A reference sign 303 represents an example of the state of the backoff counter that is decreased by the STA 103 through the SPCH, and a reference sign 305 represents an example in which the backoff counter is used for the PCH. In an example illustrated in Fig. 3, the STA 103 that does not acquire the transmission opportunity at the timing represented as 300, that does not acquire the transmission opportunity through the SPCH, and that successfully decreases the backoff counter acquires the transmission opportunity after the timing represented as 304. The STA 103 that acquires the transmission opportunity by the channel access through the PCH transmits a frame to the AP 101 through one or more channels including the PCH.

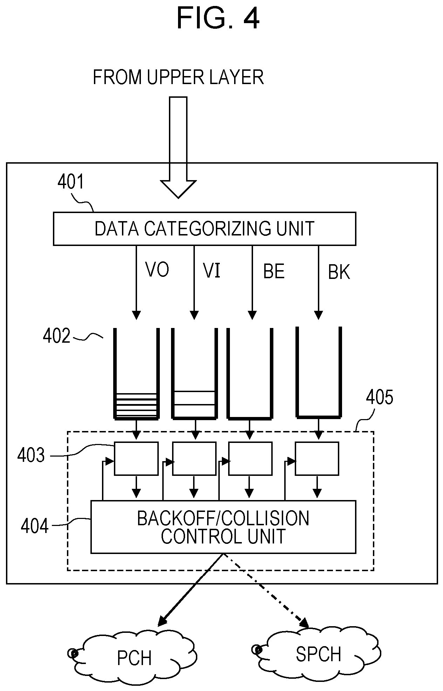

The functional configuration of the AP 101 and the STAs 102 to 103 will now be described with reference to Fig. 4. Fig. 4 schematically illustrates an example of a functional module that is included in each of the AP 101 and the STAs 102 to 103 for the channel access. Fig. 4 illustrates an extracted portion of the functional module that performs a function regarding the channel access. A data categorizing unit 401 categorizes data that is received from an upper layer into a traffic category conforming to an EDCA mechanism that is defined by the IEEE 802.11e standard. EDCA is an abbreviation for Enhanced distributed channel access.

The EDCA mechanism transmits prioritized data depending on a class such that some specific types of traffic have priority. Specifically, the categorizing unit 401 categorizes the data into one of four access categories (ACs) that are defined by the EDCA mechanism. The four ACs are typically "AC_VO" representing a voice, "AC_VI" representing a video, "AC_BE" representing best effort, and "AC_BG" representing background data.

Subsequently, the categorizing unit 401 stores the categorized data (a MAC frame) in queues 402 corresponding to the categorized ACs. The queues 402 are also referred to as traffic buffers. A MAC frame is an abbreviation for a Medium Access Control frame.

A channel access control unit 405 includes CSMA/CA execution units 403 and a backoff/collision control unit 404. The CSMA/CA execution units 403 execute channel access control based on CSMA/CA regarding the data that is held in the corresponding queues. CSMA/CA is an abbreviation for Carrier Sense Multiple Access with Collision Avoidance.

The CSMA/CA execution units 403 that detect that the data is stored in the corresponding queues read EDCA parameters that are stored in the control unit 404 and that are associated with the corresponding queues. The execution units 403 determine the transmission waiting time including the AIFS and the backoff counter, based on the read EDCA parameters. The transmission waiting time including the AIFS and the backoff counter is also simply referred to below as a backoff parameter. The EDCA parameters are assigned such that transmission of a wireless signal is relatively prioritized in the order of VO, VI, VE, and BK. The EDCA parameters include CWmin, CWmax, AIFS, and TXOP Limit. The CWmin is the minimum value of CW (Contention Window) that is the transmission waiting time, and the CWmax is the maximum value of the CW. The smaller the CWmin and the CWmax, the more the transmission opportunity is likely to be acquired. The AIFS (Arbitration Inter Frame Space) is a transmission interval for the wireless signal. The smaller the AIFS, the more the transmission opportunity is likely to be acquired. The TXOP Limit is the upper limit of TXOP that is a channel occupation time. The larger the TXOP Limit, the larger the amount of data that is permitted to be transmitted at a single acquired transmission opportunity.

Subsequently, the execution units 403 decrement the set backoff parameter and wait for transmission until the waiting time becomes zero while a channel state that is reported from the control unit 404 is the idle state. The execution units 403 stop a process of decrementing the backoff parameter while the channel state that is reported from the control unit 404 is the busy state. The execution units 403 determine that the transmission opportunity is acquired when it is determined that the waiting time becomes zero. The execution units 403 that determine that the transmission opportunity is acquired extract data (the MAC frame) from the queues and transmit the UHR PPDU including the MAC frame that is extracted in cooperation with the control unit 404, the communication unit 206, and the antenna 207 to another communication device. In the case where each communication device tries to acquire the transmission opportunity through the PCH and acquires the transmission opportunity, the UHR PPDU is transmitted through one or more channels including the PCH. In the case where each communication device tries to acquire the transmission opportunity through the SPCH and acquires the transmission opportunity, the UHR PPDU is transmitted through one or more channels including the SPCH.

For example, the control unit 404 arbitrates the case where internal collision of the acquisition of the transmission opportunity of the execution units 403 occurs. In the case where the execution units 403 corresponding to the different ACs simultaneously acquire the transmission opportunity and request transmission, control is executed such that data that is stored in the prioritized queue is prioritized. For example, in the case where the execution unit corresponding to a VO queue and the execution unit corresponding to a BK queue simultaneously acquire the transmission opportunity, data that is stored in the VO queue is preferentially transmitted. At this time, the execution unit corresponding to the BK queue is notified of the occurrence of collision, and the CW that is managed by the execution unit corresponding to the BK queue is increased.

The control unit 404 executes control, for example, for notifying the execution units 403 of a change in the channel state, for notifying the execution units 403 of the fact that the channel to which the channel access is tried transitions to the SPCH, and for notifying the execution units 403 of re-transition to the PCH. The execution units 403 that receive the notification of the transition and the notification of the re-transition update the backoff parameter as needed. A process of updating the backoff parameter will be described later.

### <Communication Control>

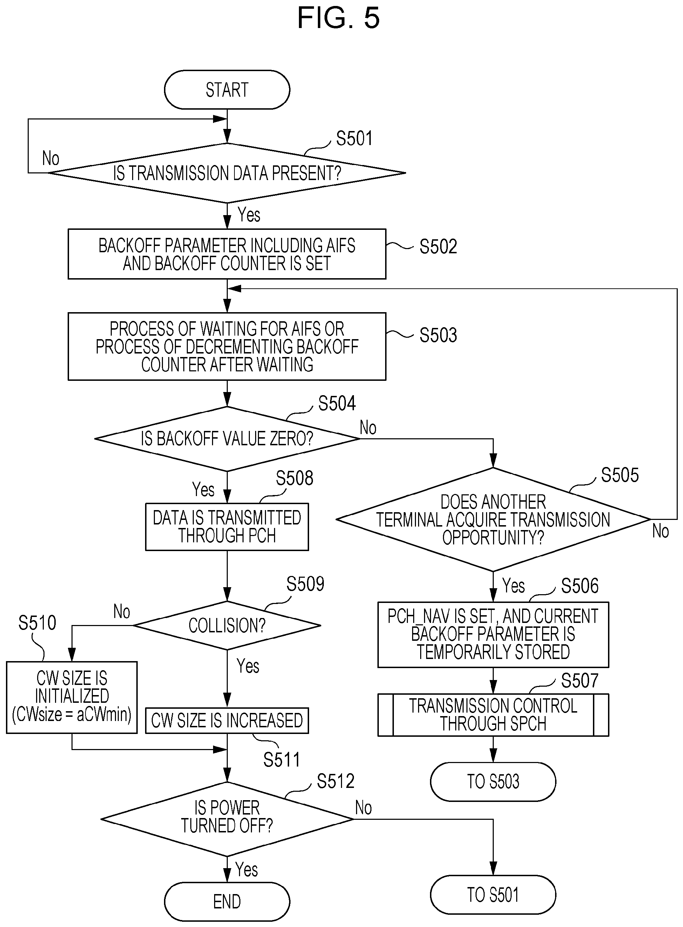

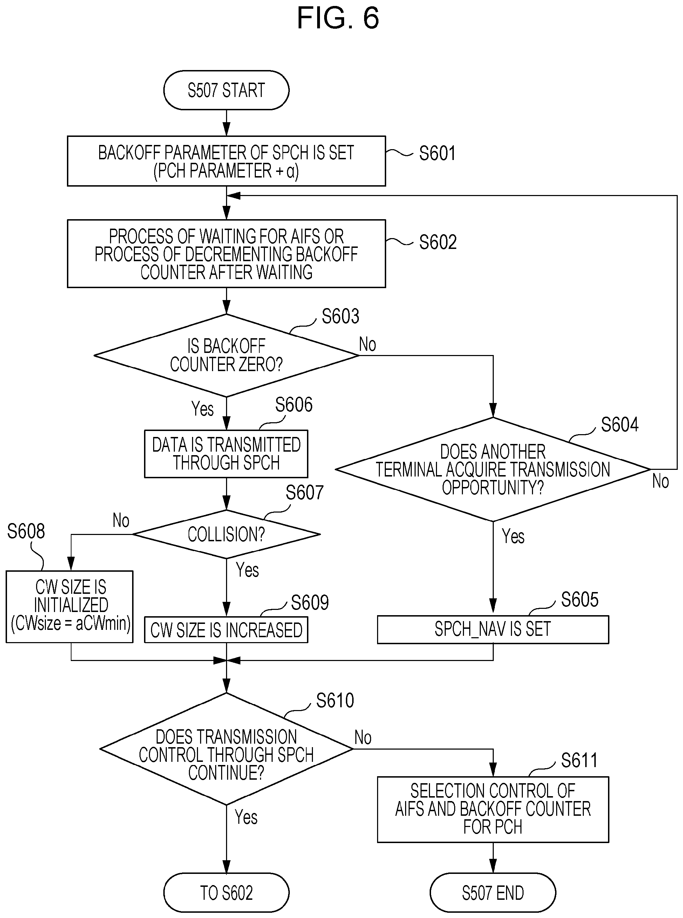

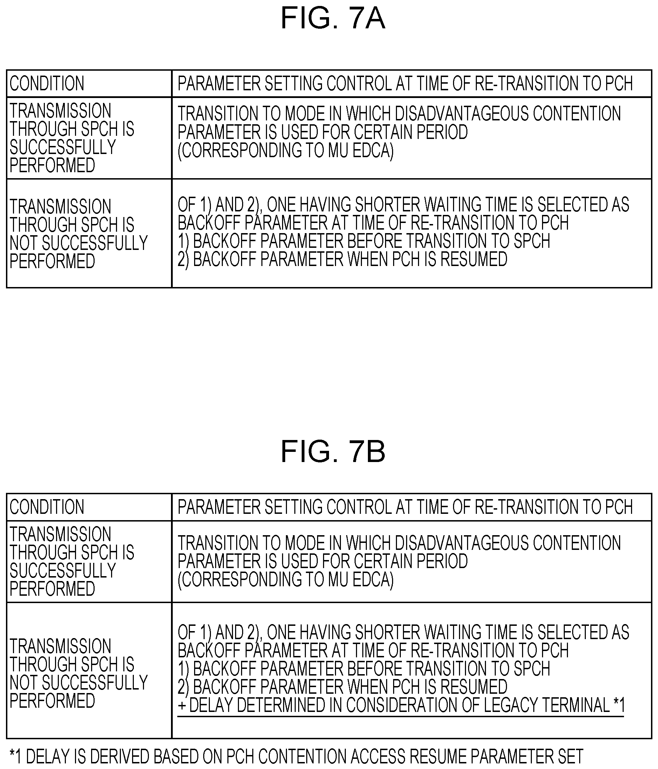

Communication control under the procedure for channel access according to the present embodiment will now be described with reference to flowcharts in Fig. 5 and Fig. 6 and tables in Fig. 7A and Fig. 7B. The tables in Fig. 7A and Fig. 7B are illustrated to describe parameter setting control during the re-transition.

Processing illustrated in the flowcharts in Fig. 5 and Fig. 6 is performed in a manner in which the processor of the control unit 202 of each of the STA 102 to the STA 103 runs a computer program that is stored in the storage unit 201. Parts of the processing such as transmission and modulation are performed in a manner in which the processor of the control unit 202, an ASIC, a DSP, a FPGA, and various processors that are included in the communication unit 206, and an ASIC, a DSP, and a FPGA that are included in the antennas and the control unit 202, for example, cooperate with each other. This is not a limitation, and the processing illustrated in the flowcharts may be performed by an ASIC in the communication unit 206, the control unit such as a processor, and the antennas in cooperation with each other. In the case where a processing entity is to be made clear, the functional unit described with reference to Fig. 4 is a subject in the description.

The flowcharts in Fig. 5 and Fig. 6 are acquired by extracting data transmission control closely associated with the present embodiment.

At S501, the execution units 403 determine whether transmission data (the MAC frame) is stored in the respective transmission queues. In the case where it is determined that the transmission data is stored, processing proceeds to S502. In the case where it is determined that the transmission data is not stored, storing the transmission data is waited for. The data is appropriately stored in the transmission queues by the upper layer not illustrated. For example, when a video streaming application, for example, starts video streaming, the categorizing unit 401 categorizes, as VI, data corresponding to video data that is acquired by a camera that is included in a STA such as the STA 102 or the STA 103 and stores the data in the VI queue. In the case where voice data is transmitted by using, for example, a VoIP (Voice over Internet Protocol) application, the categorizing unit 401 categorizes, as VO, data corresponding to the voice data and stores the data in the VO queue. A determination process at S501 is performed in parallel by the execution units 403 corresponding to the queues.

At S502, the execution units 403 that determine at S501 that the transmission data is stored acquire the EDCA parameters corresponding to the access categories of the queues associated with the execution units from the control unit 404. Subsequently, the execution units 403 determine the backoff parameter that has a backoff value represented by the AIFS and the backoff counter, based on the acquired EDCA parameters and set the determined backoff parameter. After setting ends, the processing proceeds to S503. The backoff counter is determined so as to be random within the ranges of a current contention window size (a CW size) and aCWmin corresponding to the access categories. aCWmin is an abbreviation for adaptive Contention Window minimum. The initial value (that is, the CW size that is used in the case where no collision occurs) of the CW size is the aCWmin. Whenever a collision occurs, the CW size is changed to double the size. That is, the range of candidates for random backoff increases in an environment in which collisions frequently occur, and the occurrence of collisions is reduced. That is, the execution units 403 calculate the backoff counter to be used by calculating the aCWmin corresponding to the access categories that are an EDCA parameter set and a random value in the range of the current contention window size (the CW size).

At S503, the execution units 403 perform a process of waiting for the transmission waiting time corresponding to the AIFS or a process of decrementing the backoff counter on the condition that the channel state that is reported from the control unit 404 is the idle state. The process of waiting for the transmission waiting time corresponding to the AIFS is first performed, and when the transmission waiting time corresponding to the AIFS becomes zero, the process of decrementing the backoff counter is performed.

At S504, the execution units 403 determine whether the backoff counter is zero. In the case where it is determined that the backoff counter is zero, the processing proceeds to S508. In the case where it is not determined that the backoff counter is zero (that is, in the case where the backoff counter is 1 or more), the processing proceeds to S505.

At S505, the control unit 404 determines whether another terminal (another communication device) acquires the transmission opportunity. The control unit 404 performs the carrier sensing through the PCH in cooperation with components. When the PCH changes from the idle state to the busy state, a signal that is received through the PCH is analyzed, and the analysis of the preamble of the PPDU is tried. In the case where the preamble is analyzed, and it is determined that another communication device acquires the transmission opportunity, the processing proceeds to S506. In the case where the PCH remains in the idle state, and it is determined that another communication device does not acquire the transmission opportunity, the processing proceeds to S503. In the case where it is determined that the result of the analysis of the preamble is that the received PPDU is the PPDU of the device itself, the control unit 202 of each of the STA 102 and the STA 103 appropriately controls the reception of the PPDU although this is omitted in Fig. 5.

At S506, the control unit 404 sets PCH_NAV that represents a period during which no transmission occurs through the PCH in the device, based on information such as the Duration field of the PPDU that is received at S505. Subsequently, the control unit 404 transmits, to the execution units 403, the notification of transition that represents transition to the SPCH. The execution units 403 that receive the notification of transition temporarily store, as the backoff parameter before the transition to the SPCH, the current backoff parameter that represents the transmission waiting time that is managed to acquire the transmission opportunity through the PCH. The backoff parameter before the transition is appropriately used in the case where re-transition is controlled as described later.

At S507, the control unit 202 controls transmission through the SPCH. The control will be described later with reference to Fig. 6.

At S508, the execution units 403 that determine that the backoff counter is zero request the control unit 404 to transmit data that is stored in the corresponding queues. The control unit 404 that receives the request transmits the data in the UHR PPDU format through one or more channels at least including the PCH in cooperation with other components.

At S509, the control unit 404 determines whether a collision occurs due to the data transmission. If it is determined that a collision occurs due to the data transmission, the processing proceeds to S511. If it is determined that no collision occurs, the processing proceeds to S510.

At S511, the control unit 404 notifies, of the occurrence of the collision, the execution units 403 that request the data transmission that causes the collision. The execution units 403 that receive the notification of the occurrence of the collision increase the CW size. Specifically, the execution units 403 change the CW size to double the current size.

At S510, the control unit 404 notifies the execution units that request the data transmission of the success of the data transmission. The execution units 403 that receive the notification of the success of the data transmission initialize the CW size to the aCWmin.

At S512, the control unit 202 determines whether power is turned off. In the case where it is determined that a user operation for turning the power off is received, a shutdown process, not illustrated, is performed, and a series of the transmission control ends. In the case where it is determined that the user operation for turning the power off is not received, the processing proceeds to S501, and subsequently, the data transmission control is tried.

The transmission control through the SPCH will now be described with reference to Fig. 6. When the execution units 403 receive the notification of transition that represents the transition to the SPCH, processing in Fig. 6 is performed.

At S601, the execution units 403 determine the backoff parameter to be used for the SPCH. The parameter can be set based on the backoff parameter that is temporarily stored at S506 and that is used for the PCH and a specific standby time. For example, the specific standby time can be a SIFS (Short Inter Frame Space) period or an AIFS period for one slot. Specifically, the backoff parameter to be used for the SPCH can be determined in a manner in which the backoff parameter that is used for the PCH and the specific standby time are added. In the case where the backoff parameter that is used for the primary channel exceeds a predetermined waiting time, the specific standby time may not be added. In the case where a STA such as the STA 102 or the STA 103 that begins the transition to the SPCH ends transmission for one frame, and subsequently tries transmission for another frame through the SPCH, the backoff parameter may be determined in a determination method described for S502. That is, in the case where the second and subsequent acquisitions of the transmission opportunity are tried through the SPCH, the backoff parameter is determined based on the EDCA parameters that are used for the PCH.

At S602, the execution units 403 perform a process of waiting for the transmission waiting time corresponding to the AIFS or the SIFS or a process of decrementing the backoff counter on the condition that the channel state of the SPCH that is reported from the control unit 404 is the idle state. The execution units 403 first perform the process of waiting for the transmission waiting time corresponding to a predetermined waiting time such as the AFIS or the SIFS in the backoff parameter. When the transmission waiting time corresponding to the predetermined waiting time such as the AFIS or the SIFS becomes zero, the execution units 403 perform the process of decrementing the backoff counter in the backoff parameter.

At S603, the execution units 403 determine whether the backoff counter is zero. In the case where it is determined that the backoff counter is zero, the processing proceeds to S606. In the case where it is not determined that the backoff counter is zero (that is, in the case where the backoff counter is 1 or more), the processing proceeds to S604.

At S604, the control unit 404 determines whether another terminal (another communication device) acquires the transmission opportunity through the SPCH. The control unit 404 performs the carrier sensing through the SPCH in cooperation with components. When the SPCH changes from the idle state to the busy state, a signal that is received through the SPCH is analyzed, and the analysis of the preamble of the PPDU is tried. In the case where the preamble is analyzed, and it is determined that another communication device acquires the transmission opportunity, the processing proceeds to S605. In the case where the SPCH remains in the idle state, and it is determined that another communication device does not acquire the transmission opportunity, the processing proceeds to S602. In the case where it is determined that the result of the analysis of the preamble is that the received PPDU is the PPDU of the device itself, the control unit 202 of each of the STA 102 and the STA 103 appropriately controls the reception of the PPDU although this is omitted in Fig. 6.

At S605, the control unit 404 sets SPCH_NAV that represents a period during which no transmission occurs through the SPCH in the device, based on information such as the Duration field of the PPDU that is received at S604. The control unit 404 notifies the execution units 403 of the channel state of the SPCH being the busy state. The execution units 403 suspend the process of decrementing the backoff parameter of the SPCH while the reported channel state of the SPCH is the busy state.

Subsequently, at S506, the execution units 403 that determine that the backoff counter is zero request the control unit 404 to transmit data that is stored in the corresponding queues. The control unit 404 that receives the request transmits the data in the UHR PPDU format through at least one channel including the SPCH except for the PCH in cooperation with other components.

At S507, the control unit 404 determines whether a collision occurs due to the data transmission. If it is determined that the collision occurs due to the data transmission, the processing proceeds to S609. If it is determined that no collision occurs, the processing proceeds to S608.

At S609, the control unit 404 notifies, of the occurrence of the collision, the execution units 403 that request the data transmission that causes the collision. The execution units 403 that receive the notification of the occurrence of the collision increase the CW size. Specifically, the execution units 403 change the CW size to double the current size.

At S608, the control unit 404 notifies the execution units that request the data transmission of the success of the data transmission. The execution units 403 that receive the notification of the success of the data transmission initialize the CW size to the aCWmin.

At S610, the control unit 404 determines whether the transmission control through the SPCH continues. Specifically, if it is determined that the period of the PCH_NAV that is set at S506 ends, the control unit 404 determines that the transmission control through the SPCH does not continue, and the processing proceeds to S611. If it is determined that the period of the PCH_NAV that is set at S507 does not end, the control unit 404 determines that the transmission control through the SPCH does not continue, and the processing proceeds to S601.

At S611, the control unit 404 notifies the execution units 403 of re-transition to the PCH. The execution units 403 that receive the notification of the re-transition execute selection control of the backoff parameter including the backoff counter and the AIFS used in the case of the re-transition to the PCH. The selected backoff parameter including the backoff counter and the AIFS is used for the channel access after the re-transition to the PCH. After the selection control ends, the control unit 404 causes the processing to proceed to S503. In the case where the execution units 403 do not perform a backoff procedure (that is, in the case where data to be transmitted is not stored), the selection control is omitted. In the case where the selection control is omitted, the execution units 403 begin the transition to the waiting control of the transmission data described for S501.

It can be said that the processes at S610 and S611 correspond to control for ending the control for trying to acquire the transmission opportunity through the secondary channel before the period of the NAV that is set for the primary channel elapses.

A specific example of the selection control will be described with reference to Fig. 7A and Fig. 7B. Fig. 7A is a table for describing the parameter setting control at the time of the re-transition to the PCH according to the present embodiment.

The control unit 404 and the execution units 403 change the parameter setting control between the case where the data transmission through the SPCH is successfully performed even once and the case where the data transmission through the SPCH is not successfully performed. In the case where the data transmission through the SPCH is successfully performed even once by themselves, the control unit 404 enters a mode in which a disadvantageous contention parameter is used for a certain period. A STA that enters this mode may determine the backoff parameter that represents the transmission waiting time, based on a MU EDCA parameter that is reported during the period of MU_EDCA Timer that is reported from the AP 101. The MU_EDCA Timer and the MU EDCA parameter are defined by the IEEE 802.11ax standard and are included in, for example, the Beacon frame that is transmitted by the AP 101. These parameters are provided to force a terminal that succeeds in the data transmission regarding MU transmission of uplink to use the disadvantageous contention parameter for the certain period. According to the present embodiment, a STA that succeeds in transmission through the SPCH determines the backoff parameter by using the parameter. This control enables fairness to another communication terminal that does not succeed in transmission to be ensured.

In the case where the data transmission through the SPCH is not successfully performed by themselves, the execution units 403 compare the backoff parameter that is stored at S406 and that is used for the PCH before the transition to the SPCH and the backoff parameter when the PCH is resumed from the SPCH. The backoff parameter that has a shorter waiting time is selected as the backoff parameter to be used after the re-transition to the PCH. That is, in the case where the backoff parameter can be successfully decremented through the SPCH, the backoff parameter can be handed over to the PCH. In the case where the backoff parameter of the SPCH has a large value, such as the case where a collision occurs through the SPCH, the value is not handed over, and the channel access through the PCH can be resumed by using the backoff parameter that is previously used for the PCH. This control increases the possibility of granting the transmission opportunity to a terminal that cannot acquire the transmission opportunity through the PCH, that cannot acquire the transmission opportunity through the SPCH, and that begins the re-transition to the PCH.

### <Second Embodiment>

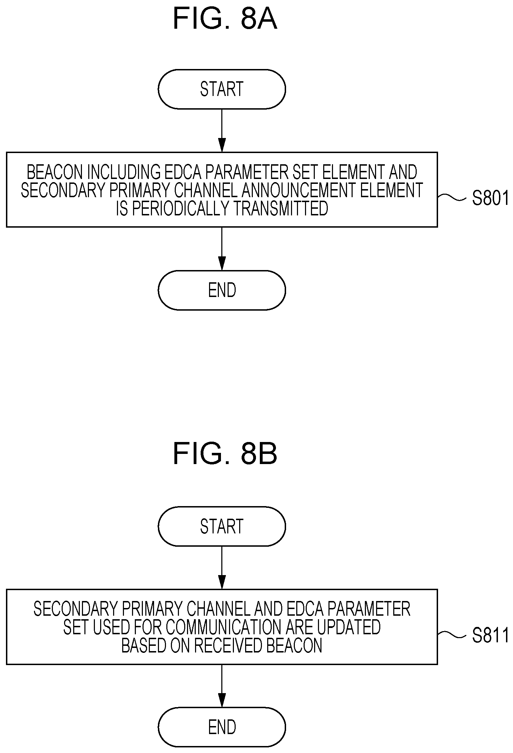

In an example described according to the first embodiment, in the case where a STA that succeeds in transmission through the SPCH tries to acquire the transmission opportunity again, the backoff parameter is determined based on the EDCA parameter set for the PCH. According to a second embodiment, EDCA parameters for the SPCH are shared between the AP and the STAs in addition to the information for identifying the SPCH that is shared according to the first embodiment. The case where the parameters are used will be described with reference to Fig. 8A and Fig. 8B.

Fig. 8A illustrates parameter notification control that is executed by the AP 101. Fig. 8B illustrates parameter update control that is executed by the STAs 102 to 103. Processing illustrated in a flowchart in Fig. 8A is performed in a manner in which the processor of the control unit 202 of the AP 101 runs a computer program that is stored in the storage unit 201. Processing illustrated in a flowchart in Fig. 8B is performed in a manner in which the processor of the control unit 202 of each of the STAs 102 to 103 runs a computer program that is stored in the storage unit 201. In the case of all of the communication devices, parts of the processing such as transmission and modulation are performed in a manner in which the processor of the control unit 202, an ASIC, a DSP, a FPGA, and various processors that are included in the communication unit 206, and the antennas, for example, cooperate with each other. Parts of the processing may be performed in cooperation with an ASIC, a DSP, and a FPGA that are included in the control unit 202. This is not a limitation, and each communication device can perform the processing illustrated in the flowcharts by using an ASIC in the communication unit 206, the control unit such as a processor, and the antennas in cooperation with each other. In the case where a processing entity is to be made clear, the functional unit described with reference to Fig. 4 is a subject in the description.

The flowcharts in Fig. 8A and Fig. 8B are acquired by extracting parameter communication control according to the present embodiment. At S801, the control unit 202 of the AP 101 periodically transmits a beacon that includes SPCH EDCA Parameter Set Element that includes the EDCA parameters to be used for the SPCH in cooperation with components. The control unit 202 adds the Secondary Primary Channel Announcement Element for identifying the SPCH described above to the beacon that is periodically transmitted. As for any parameter, the AP 101 can appropriately select a parameter to be used. For example, the AP 101 can appropriately re-select a parameter to be used for the SPCH and the SPCH, based on, for example, the degree of congestion. For example, the AP 101 may provide a detailed action setting screen to the user and may store, as an action setting, a setting via the detailed action setting screen. In this case, the AP 101 selects a channel number to be used for the SPCH and a parameter to be used for the SPCH, based on the action setting that is changed by the user via the detailed action setting screen. The detailed action setting screen may be configured such that the channel number of the SPCH, and parameters per AC such as the CWmin, the CWmax, the AIFS, and the TXOPLimit can be set.

At S811, the control unit 202 of each of the STAs 102 to 103 acquires the value of the element described above, based on the Beacon frame that is received from the AP 101 in cooperation with components. The SPCH to which it is to transition and the EDCA parameter set to be used for the SPCH are set based on the acquired value.

In some cases, at S602, the STAs such as the STA 102 to the STA 103 try the transmission of another frame through the SPCH after transmitting a frame at the first transmission opportunity. In these cases, the STAs may be modified so as to determine the backoff parameter by using the EDCA parameters for the SPCH that are updated at S811.

### <Third Embodiment>

In examples described according to the first and second embodiments, all of the STAs that are connected to the AP 101 support the data transmission through the SPCH. According to a third embodiment, control in the case where the STAs that are connected to the AP 101 include a legacy STA that does not support the data transmission through the SPCH will be described with reference to Fig. 7B to Fig. 10. According to the present embodiment, the legacy STA supports one or more standards among the IEEE 802.11a/b/g/n/ac/ax/be standards but does not support the IEEE 802.11bn standard.

The AP 101 determines a parameter to be adjusted such that a terminal that begins the transition to the SPCH is not too advantageous, based on, for example, the number of the legacy STA and notifies the STAs. A STA that supports the data transmission through the SPCH uses the reported parameter for the selection control of the backoff parameter at the time of the re-transition to the PCH.

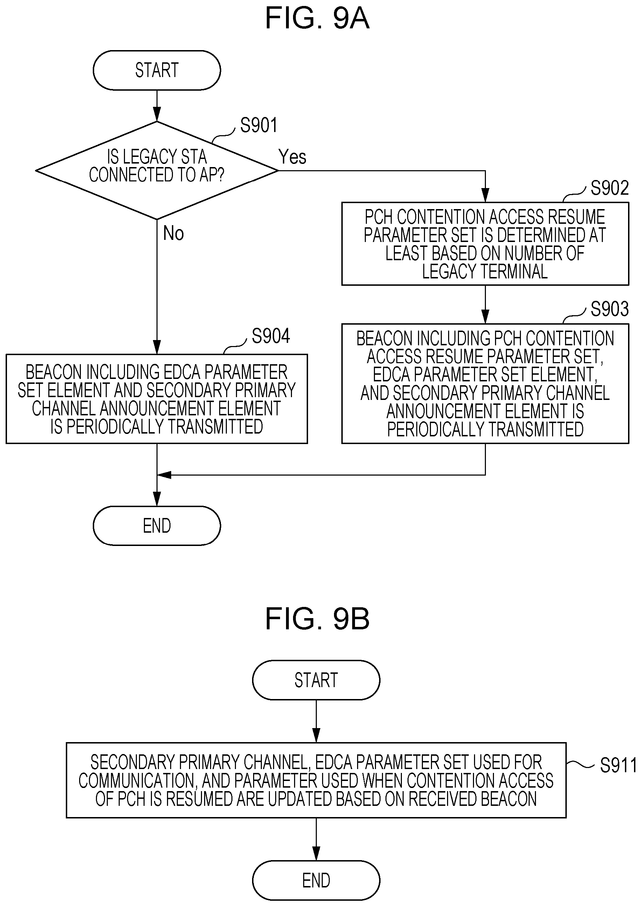

Fig. 9A and Fig. 9B are used for specific description. Processing illustrated in a flowchart in Fig. 9A is performed in a manner in which the processor of the control unit 202 of the AP 101 runs a computer program that is stored in the storage unit 201. Processing illustrated in a flowchart in Fig. 9B is performed in a manner in which the processor of the control unit 202 of each of the STAs 102 to 103 runs a computer program that is stored in the storage unit 201. In the case of all of the communication devices, parts of the processing such as transmission and modulation are performed in a manner in which the processor of the control unit 202, an ASIC, a DSP, a FPGA, and various processors that are included in the communication unit 206, and the antennas, for example, cooperate with each other. Parts of the processing may be performed in cooperation with an ASIC, a DSP, and a FPGA that are included in the control unit 202. This is not a limitation, and each communication device can perform the processing illustrated in the flowcharts by using an ASIC in the communication unit 206, the control unit such as a processor, and the antennas in cooperation with each other. In the case where a processing entity is to be made clear, the functional unit described with reference to Fig. 4 is a subject in the description.

At S901, the control unit 202 of the AP 101 determines whether the legacy STA is connected to the AP 101. In the case where it is determined that the legacy STA is connected, processing proceeds to S902. In the case where the legacy STA is not connected, the processing proceeds to S904.

At S904, the control unit 202 executes the same notification control as the notification control described for S802.

At S902, the control unit 202 determines a value that is included in PCH contention acess resume Parameter set Element, at least based on the number of the legacy STA. This value represents an additional waiting time to be added to the backoff parameter in the case where a STA that begins the transition to the SPCH begins the re-transition to the PCH.

At S903, the control unit 202 transmits a beacon that includes the PCH contention acess resume Parameter set Element that includes the value determined at S903 in addition to the Element described for S801.

As for the STAs, at S911, the control unit 202 of each of the STAs 102 to 103 acquires the value of the element described above, based on the Beacon frame that is received from the AP 101 in cooperation with components. The control unit 404 sets the SPCH to which it is to transition and the EDCA parameter set to be used for the SPCH, based on the value that is acquired by the control unit 202. In the case where the PCH contention acess resume Parameter set Element is included in the received Beacon frame, the control unit 202 acquires the value of the element. The control unit 404 stores and updates a new parameter to be used when the contention access of the PCH is resumed, based on the acquired value.

According to the present embodiment, the STAs such as the STAs 102 to 102 execute the selection control illustrated in Fig. 7B instead of the selection control at S511 described with reference to Fig. 7A.

The selection control of a STA that succeeds in transmission through the SPCH is the same as in the case described with reference to Fig. 7A. According to the present embodiment, a STA that does not succeed in transmission through the SPCH even once executes control so as to select the transmission parameter to which a delay in consideration of the legacy STA is added. The delay is derived based on the value of the PCH contention acess resume Parameter set Element of the Beacon frame described above.

Control in the case where the data transmission through the SPCH is not successfully performed will be specifically described. In this case, the execution units 403 compare the backoff parameter that is stored at S406 and that is used for the PCH before the transition to the SPCH and a parameter acquired by converting the delay into the backoff parameter when the PCH is resumed from the SPCH. The backoff parameter that has a shorter waiting time is selected as the backoff parameter to be used after the re-transition to the PCH. That is, in the case where the backoff parameter can be successfully decremented through the SPCH, and the transmission waiting time is shorter than that before the transition even when the delay in consideration of the legacy STA is added, the parameter acquired by adding the delay can be handed over to the PCH.

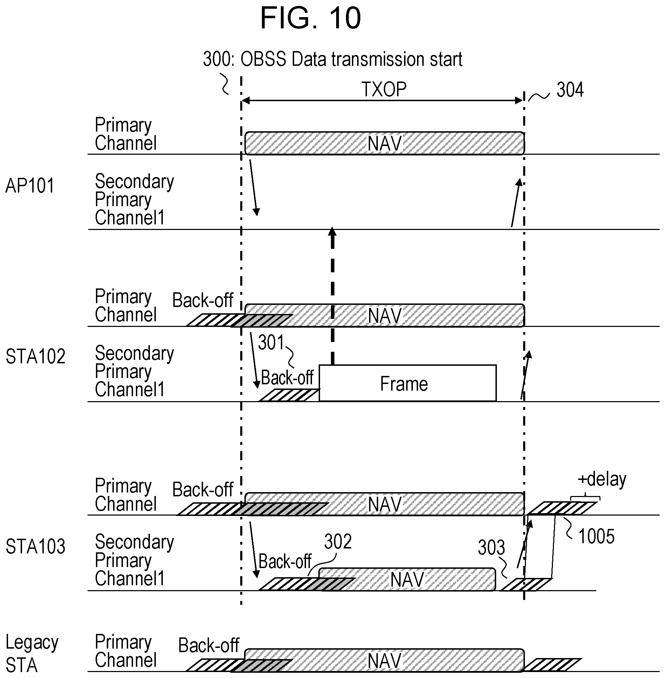

The control enables a STA that begins the transition to the SPCH and that tries transmission, but cannot start transmission to be given a slight priority and inhibits the legacy STA from being too disadvantageous. Fig. 10 schematically illustrates the transmission control according to the third embodiment. In the description, attention is paid to the STA 103. In an example described herein, the delay for three slots is specified as the value of the PCH contention acess resume Parameter set Element.

At the timing represented by using the reference sign 300, the STA 103 that has the transmission waiting time for nine slots tries transmission through the SPCH. As a result, the waiting time can be decremented up to the transmission waiting time for the remaining three slots. At a timing represented by using a reference sign 1005 at which the re-transition to the PCH occurs, the delay for three slots is added, and the channel access through the PCH is resumed with the transmission waiting time for six slots.

In this case, at the timing represented by using the reference sign 300, the transmission waiting time for five slots remains, and the legacy STA that continues to set the NAV through the PCH resumes the channel access through the PCH with the transmission waiting time for five slots. The AP 101 thus appropriately sets an adjustment parameter, and a terminal that supports the SPCH uses the adjustment parameter. Consequently, even the legacy STA can acquire the transmission opportunity fairly to a certain extent.

### <Modification>

According to the embodiments described above, it is assumed that the SPCH is the single channel. However, the present technique is not limited thereto, multiple SPCHs can be defined, and the channel access can be performed substantially in parallel by using the multiple SPCHs.

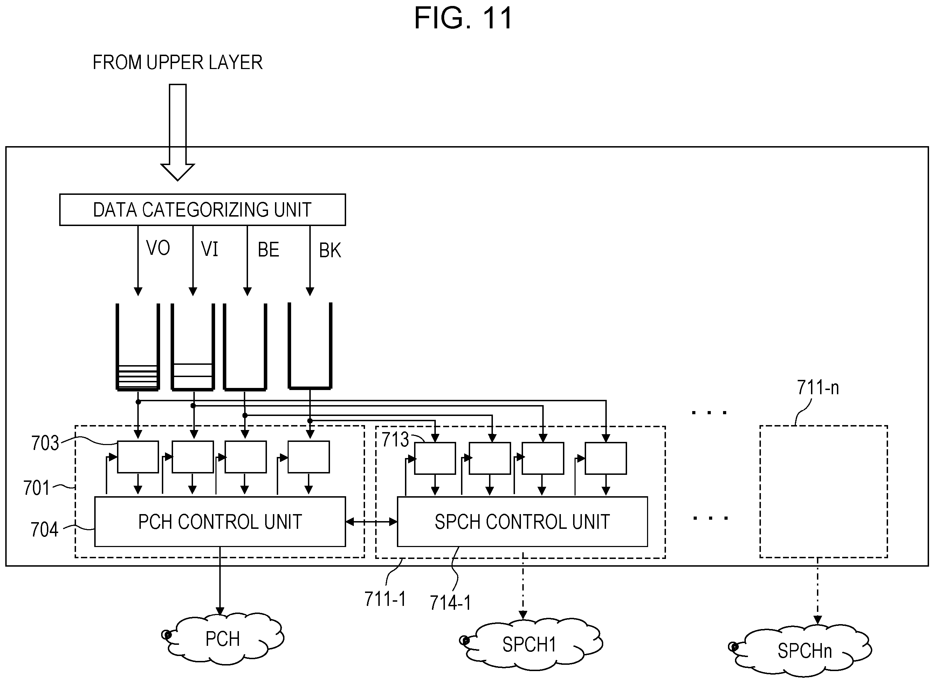

A functional module according to the modification will be described with reference to Fig. 11. Fig. 11 illustrates the modification to the functional module. A difference from the functional module according to the first embodiment illustrated in Fig. 4 is that multiple channel access control units are included. According to the present embodiment, a PCH access control unit 701 for the PCH and multiple SPCH access control units 711 for the SPCH are included. Fig. 11 illustrates an example in the case where each communication device such as the STAs and the AP includes n SPCH access control units 711 designated as 711-1 to 711-n.

The PCH access control unit 701 includes a PCH control unit 704 for communication control and for collision and backoff control through the PCH and multiple CSMA/CA execution units 703 that are connected to queues. Each SPCH access control unit 711 includes a SPCH control unit 714 for communication control and for collision and backoff control through the SCHs and multiple CSMA/CA execution units 713 that are connected to queues.

The PCH control unit 704 and the SPCH control units 714 are connected to each other so as to be communicable and perform a process of sharing the backoff parameter at the time of the transition to the SPCH and at the time of the re-transition to the PCH.

The PCH control unit 704 of a STA that determines the transition to the SPCH from the PCH acquires the backoff parameter that is used by the execution units 703 to acquire the transmission opportunity through the PCH and transmits the backoff parameter and the notification of the transition to the SPCH control units. The SPCH control units 714 that receive the backoff parameter and the notification of the transition transmit the backoff parameter and the notification of the transition to the respective CSMA/CA execution units 713. The execution units 713 that receive the notification of the transition determine the backoff parameter of the SPCH, based on the received backoff parameter and try the channel access through their own CHs. At this time, control of the channel access through the SCHs after determination is the same as that according to the embodiments described above and is accordingly omitted. If the backoff counter reaches zero, and the transmission opportunity is successfully acquired, the execution units 713 perform a process of transmitting the UHR PPDU that includes the data stored in the corresponding queues in cooperation with the control units 714 connected. Each SPCH control unit 714 notifies the other SPCH control units 714 and the PCH control unit 704 of the acquisition of the transmission opportunity. The other SPCH control units 714 that receive the notification transmit the notification of a request for stopping the backoff procedure to the execution units 713 that are connected to the queues corresponding to the access categories during the transmission. The execution units 713 that receive the notification stop the backoff procedure. The execution unit 713 that is provided for the access category that differs from the access category of the data during the transmission continues the channel access.

Control at the time of the re-transition to the PCH will now be described. If the re-transition is determined, the PCH control unit 704 transmits the notification of the re-transition to the SPCH control units 714. The SPCH control units 714 that receive the notification of the re-transition transmit the backoff parameter (the current backoff parameter) when the PCH is resumed from the SPCH to the PCH control unit 704. The PCH control unit 704 compares multiple backoff parameters that are received from the respective SPCH control units 714 and the backoff parameter of the PCH that is stored by itself and selects the shortest transmission waiting time. At this time, the delay in consideration of the legacy STA described according to the third embodiment may be added.

### <Another Embodiment 1>

According to the embodiments described above, it is assumed that the backoff parameter that is used for the SPCH is handed over to the PCH when the PCH is resumed from the SPCH, but this is not a limitation. For simplicity of processing, when the PCH is resumed from the SPCH, the contention parameter may be re-calculated based on the EDCA parameters of the PCH, and the contention parameter that is re-calculated may be used for the channel access of the PCH. According to the embodiments described above, a channel for determining whether transmission through a SCH (or a NPCH) is possible in the case where it is determined that the PCH is in the busy state is referred to as the SPCH, but this is not limited thereto. In the sense that the channel is a second or subsequent channel in the primary channel, this may be referred to as a primary secondary channel (PSCH).

In examples described according to the embodiments described above, the STA 102 or the STA 103, for example, tries the data transmission to the AP by using a SPCH access procedure, but this is not a limitation. The AP 101 can perform the SPCH access procedure described above and can try the data transmission to the STA.

### <Another Embodiment 2>

The disclosure according to the present embodiment includes configurations described below.

### (First Configuration)

A communication device includes transmission control means for setting a NAV (Network Allocation Vector) corresponding to a transmission opportunity through a primary channel, for determining a backoff parameter of a secondary channel, at least based on a backoff counter that is a waiting time for the primary channel, and for trying to acquire the transmission opportunity through the secondary channel by using the backoff parameter that is determined and to transmit data in a case where another communication device acquires the transmission opportunity through the primary channel through which the data is to be transmitted in a state in which a backoff parameter of the primary channel that is a waiting time until start of transmitting the data through the primary channel and that includes at least the backoff counter is not zero, and
the transmission control means determines the backoff parameter of the secondary channel, also based on a waiting time corresponding to an AIFS (Arbitration Inter Frame Space) period in a case where the backoff parameter of the primary channel includes the waiting time corresponding to the AIFS period.

### (Second Configuration)

As for the communication device described in First Configuration, the communication device is a station device, and further includes:
storage means for storing an EDCA (Enhanced distributed channel access) parameter set that is used for data transmission; and
calculation means for calculating the backoff counter that is the waiting time until the start of transmitting the data, at least based on the EDCA parameter set.

### (Third Configuration)

The communication device described in Second Configuration further includes:
reception means for receiving an EDCA parameter set from an access point device; and
update means for updating the EDCA parameter set that is stored in the storage means, based on the EDCA parameter set that is received by the reception means.

### (Fourth Configuration)

As for the communication device described in First Configuration or Second Configuration,
the communication device is an access point device,
the transmission control means tries to periodically transmit a Beacon frame through the primary channel, and
the Beacon frame that is transmitted by the access point device includes at least information for identifying the secondary channel and the EDCA parameter set.

### (Fifth Configuration)

As for the communication device described in any one of First Configuration to Fourth Configuration,
the transmission control means ends control for trying to acquire the transmission opportunity through the secondary channel before a period of the NAV that is set for the primary channel elapses and executes control for trying to acquire the transmission opportunity through the primary channel.

### (Sixth Configuration)

As for the communication device described in Fifth Configuration,
the transmission control means sets, as a contention parameter to be used after re-transition to the primary channel, a contention parameter of the secondary channel in a case where the control for trying to acquire the transmission opportunity through the secondary channel ends, and the control for trying to acquire the transmission opportunity through the primary channel after the re-transition to the primary channel is executed.

### (Seventh Configuration)

As for the communication device described in Sixth Configuration,
the transmission control means sets, as a backoff parameter to be used after the re-transition to the primary channel, the backoff parameter of the secondary channel in a case where a waiting time corresponding to the contention parameter of the secondary channel is shorter than a waiting time corresponding to the backoff parameter of the primary channel when the NAV is set through the primary channel, and the transmission control means sets, as the backoff parameter to be used after the re-transition to the primary channel, the backoff parameter of the primary channel when the NAV is set through the primary channel in a case where the waiting time corresponding to the contention parameter of the secondary channel is longer than the waiting time corresponding to the backoff parameter of the primary channel when the NAV is set through the primary channel.

### (Eighth Configuration)

As for the communication device described in any one of First Configuration to Seventh Configuration,
the transmission control means separately manages the backoff parameter of the primary channel and the backoff parameter of the secondary channel, and the transmission control means determines the backoff parameter of the secondary channel, at least based on the backoff parameter that is the waiting time for the primary channel and tries to acquire the transmission opportunity through the secondary channel by using the backoff parameter that is determined in a case where the other communication device acquires the transmission opportunity through the primary channel through which the data is to be transmitted.

### (Ninth Configuration)

As for the communication device described in any one of First Configuration to Eighth Configuration,
the backoff parameter of the secondary channel is determined so as to include at least the backoff counter of the primary channel and a specific standby time, and
as for control for trying to acquire the transmission opportunity through the secondary channel, the transmission control means determines that the transmission opportunity is acquired in a case where the specific standby time and a waiting time including the backoff counter elapse in a state in which the secondary channel is idle.

### (Tenth Configuration)

A method of controlling a communication device includes:
a transmission control step of setting a NAV (Network Allocation Vector) corresponding to a transmission opportunity through a primary channel, for determining a backoff parameter of a secondary channel, at least based on a backoff counter that is a waiting time for the primary channel, and for trying to acquire the transmission opportunity through the secondary channel by using the backoff parameter that is determined and to transmit data in a case where another communication device acquires the transmission opportunity through the primary channel through which the data is to be transmitted in a state in which a backoff parameter of the primary channel that is a waiting time until start of transmitting the data through the primary channel and that includes at least the backoff counter is not zero, and
the transmission control step includes determining the backoff parameter of the secondary channel, also based on a waiting time corresponding to an AIFS (Arbitration Inter Frame Space) period in a case where the backoff parameter of the primary channel includes the waiting time corresponding to the AIFS period.

### (Eleventh Configuration)

A program causes a computer to execute the method of controlling the communication device described in Tenth Configuration.

### <Another Embodiment 3>

The present invention can also be carried out in a manner in which the system or the device is provided with a program that fulfills one or more functions according to the embodiments described above via a network or a storage medium, and one or more processors of a computer of the system or the device read and execute the program. The present disclosure can also be carried out by a circuit (for example, an ASIC) that fulfills one or more functions.

The invention is not limited to the embodiments described above, and various modifications and alterations can be made without departing from the spirit and scope of the invention. Accordingly, claims are attached to make the scope of the invention public.

This application claims the benefit of Japanese Patent Application No. 2023-182153, filed October 23, 2023, which is hereby incorporated by reference herein in its entirety.

### Reference Signs List

- 101: AP
- 102: STA
- 103: STA
- 202: control unit

## Claims

1. A communication device comprising:
transmission control means for setting a NAV (Network Allocation Vector) corresponding to a transmission opportunity through a primary channel, for determining a backoff parameter of a secondary channel, at least based on a backoff counter that is a waiting time for the primary channel, and for trying to acquire the transmission opportunity through the secondary channel by using the backoff parameter that is determined and to transmit data in a case where another communication device acquires the transmission opportunity through the primary channel through which the data is to be transmitted in a state in which a backoff parameter of the primary channel that is a waiting time until start of transmitting the data through the primary channel and that includes at least the backoff counter is not zero,
wherein the transmission control means determines the backoff parameter of the secondary channel, also based on a waiting time corresponding to an AIFS (Arbitration Inter Frame Space) period in a case where the backoff parameter of the primary channel includes the waiting time corresponding to the AIFS period.

2. The communication device according to claim 1, wherein the communication device is a station device, and further comprises:
storage means for storing an EDCA (Enhanced distributed channel access) parameter set that is used for data transmission; and
calculation means for calculating the backoff counter that is the waiting time until the start of transmitting the data, at least based on the EDCA parameter set.

3. The communication device according to claim 2, further comprising:
reception means for receiving an EDCA parameter set from an access point device; and
update means for updating the EDCA parameter set that is stored in the storage means, based on the EDCA parameter set that is received by the reception means.

4. The communication device according to claim 1 or claim 2, wherein the communication device is an access point device,
wherein the transmission control means tries to periodically transmit a Beacon frame through the primary channel, and
wherein the Beacon frame that is transmitted by the access point device includes at least information for identifying the secondary channel and an EDCA parameter set.

5. The communication device according to any one of claim 1 to claim 4, wherein the transmission control means ends control for trying to acquire the transmission opportunity through the secondary channel before a period of the NAV that is set for the primary channel elapses and executes control for trying to acquire the transmission opportunity through the primary channel.

6. The communication device according to claim 5, wherein the transmission control means sets, as a contention parameter to be used after re-transition to the primary channel, a contention parameter of the secondary channel in a case where the control for trying to acquire the transmission opportunity through the secondary channel ends, and the control for trying to acquire the transmission opportunity through the primary channel after the re-transition to the primary channel is executed.

7. The communication device according to claim 6, wherein the transmission control means sets, as a backoff parameter to be used after the re-transition to the primary channel, the backoff parameter of the secondary channel in a case where a waiting time corresponding to the contention parameter of the secondary channel is shorter than a waiting time corresponding to the backoff parameter of the primary channel when the NAV is set through the primary channel, and the transmission control means sets, as the backoff parameter to be used after the re-transition to the primary channel, the backoff parameter of the primary channel when the NAV is set through the primary channel in a case where the waiting time corresponding to the contention parameter of the secondary channel is longer than the waiting time corresponding to the backoff parameter of the primary channel when the NAV is set through the primary channel.

8. The communication device according to any one of claim 1 to claim 7, wherein the transmission control means separately manages the backoff parameter of the primary channel and the backoff parameter of the secondary channel, and the transmission control means determines the backoff parameter of the secondary channel, at least based on the backoff parameter that is the waiting time for the primary channel and tries to acquire the transmission opportunity through the secondary channel by using the backoff parameter that is determined in a case where the other communication device acquires the transmission opportunity through the primary channel through which the data is to be transmitted.

9. The communication device according to any one of claim 1 to claim 8, wherein the backoff parameter of the secondary channel is determined so as to include at least the backoff counter of the primary channel and a specific standby time, and
wherein as for control for trying to acquire the transmission opportunity through the secondary channel, the transmission control means determines that the transmission opportunity is acquired in a case where the specific standby time and a waiting time including the backoff counter elapse in a state in which the secondary channel is idle.

10. A method of controlling a communication device, the method comprising:
a transmission control step of setting a NAV (Network Allocation Vector) corresponding to a transmission opportunity through a primary channel, for determining a backoff parameter of a secondary channel, at least based on a backoff counter that is a waiting time for the primary channel, and for trying to acquire the transmission opportunity through the secondary channel by using the backoff parameter that is determined and to transmit data in a case where another communication device acquires the transmission opportunity through the primary channel through which the data is to be transmitted in a state in which a backoff parameter of the primary channel that is a waiting time until start of transmitting the data through the primary channel and that includes at least the backoff counter is not zero,
wherein the transmission control step includes determining the backoff parameter of the secondary channel, also based on a waiting time corresponding to an AIFS (Arbitration Inter Frame Space) period in a case where the backoff parameter of the primary channel includes the waiting time corresponding to the AIFS period.

11. A program for causing a computer to execute the method of controlling the communication device according to claim 10.
